# EUROPÄISCHE PATENTSCHRIFT

(11) **EP 2 182 616 B1**
(45) Veröffentlichungstag und Bekanntmachung des Hinweises auf die Patenterteilung: **19.11.2014**
(21) Anmeldenummer: 09013330.7
(22) Anmeldetag: 22.10.2009
(51) Int. Cl.: H02K 3/52

(54) **Bürstenloser Gleichstrommotor**
Brushless DC motor
Moteur à courant continu sans balai

(30) Priorität: 04.11.2008 DE 102008055731
(43) Veröffentlichungstag der Anmeldung: 05.05.2010
(73) Patentinhaber: KNF Neuberger GmbH, D-79112 Freiburg (DE)
(72) Erfinder: Hauser, Erwin, 79312 Emmendingen (DE); Becker, Erich, 79189 Bad Krozingen (DE)
(74) Vertreter: Kunst, Manuel Nikolaus Johannes

(56) Entgegenhaltungen:
- EP-A2- 1 324 465
- DE-A1- 10 045 596
- DE-U1-202006 012 075

## Beschreibung

Die Erfindung betrifft einen bürstenlosen Gleichstrommotor.

Es ist bereits bekannt, auch bürstenlose Gleichstrommotoren als Pumpenantrieb zu verwenden. Solche bürstenlosen Gleichstrommotoren zeichnen sich durch einen hohen Wirkungsgrad und eine lange Lebensdauer aus.

Die bislang verwendeten bürstenlosen Gleichstrommotoren arbeiten meist mit Hall-Sensoren, welche die Rotor-Position erkennen, so dass die Kommutierungen des Elektromotors zu den richtigen Zeitpunkten stattfinden können. Das Drehmoment bürstenloser Gleichstrommotoren hängt stark davon ab, ob die zur Ansteuerung der Statorwicklungen verwendeten Hall-Sensoren optimal zum Rotor und zur angesteuerten Wicklung liegen. Bei den vorbekannten bürstenlosen Gleichstrommotoren werden die Hall-Sensoren meist an den vorgesehenen Stellen auf den Stator aufgeklebt, wobei die elektrischen Kontakte der Hall-Sensoren mit der Steuerungselektronik verlötet werden müssen. Die Ausrichtung, das Verkleben und die Verlötung der Hall-Sensoren ist jedoch mit einem erheblichen Aufwand verbunden.

Aus der EP 1 758 228 A1 ist bereits ein bürstenloser Gleichstrommotor bekannt, der als Außenläufermotor ausgebildet ist und einen, Permanentmagnete aufweisenden Rotor hat, der in dem durch Kommutierung wechselnden Magnetfeld eines vom Rotor umgriffenen Stators rotiert. Dieses Magnetfeld ist durch ein Wicklungssystem in Umfangsrichtung voneinander beabstandeter und auf einen Isolationskörper aufgebrachter Leitungswicklungen erzeugbar, wobei zur Ansteuerung der voneinander beabstandeten elektrischen Leitungswicklungen des im Stator vorgesehenen Wicklungssystems eine Steuerungselektronik mit, den Phasen des Wicklungssystems zugeordneten berührungslosen Drehstellungssensoren zugeordnet ist. Diese Drehstellungssensoren sind auf einem gemeinsamen, als Leiterplatte ausgebildeten Sensorträger angeordnet, der an einer Stirnseite des Stators befestigbar ist. Zur Verbesserung der Positionierung der Drehstellungssensoren ist vorgesehen, dass die Leiterplatten mittels einer Positionierhilfe in einem Anschlussblock festgelegt wird. Der Anschlussblock wird wiederum gegenüber dem Stator mittels Führungen positioniert. Da die die Drehstellungssensoren tragende Leiterplatte einerseits und der zur Aufnahme der Leiterplatte bestimmte Anschlussblock andererseits an sich separate Bauteile sind, ist der vorbekannte Gleichstrommotor in diesem Bereich mehrteilig und entsprechend aufwendig ausgestaltet. Dabei addieren sich auch die Toleranzen dieser Bauteile, so dass die angestrebte optimale Positionierung der Drehstellungssensoren nur in etwa erreicht werden kann. Aufgrund der Mehrteiligkeit in diesem sensiblen Bereich ist der vorbekannte Gleichstrommotor mit einem erheblichen Aufwand in Konstruktion und Herstellung verbunden.

Aus der DE 602 15 758 T2 ist bereits ein bürstenloser Gleichstrommotor vorbekannt, bei dem die Steuerungselektronik in einem Behälter untergebracht ist, der mittels Schneid-Klemmverbindern relativ zum Stator positioniert und mit der Wicklung desselben verbunden wird. Dabei sind die Steuerungselektronik und die zu ihr gehörigen Drehstellungssensoren auf einer ringförmigen Platine vorgesehen, die in einem elektrisch isolierenden Material eingekapselt sind, welches den Behälter ausfüllt. Auch bei diesem vorbekannten Gleichstrommotor sind die Steuerungselektronik, die Drehstellungssensoren und die zu ihrer Positionierung in Bezug auf den Stator erforderlichen Positionierhilfen mehrteilig ausgestaltet und erfordern einen nicht unerheblichen Konstruktion- und Herstellungsaufwand. Zudem ist in der DE 602 15 758 T2 nicht weiter beschrieben, wie der die Schneid-Klemm-Verbinder tragende Behälter einerseits und die im Behälterinneren befindliche Platine andererseits in ihrer Lage derart zueinander positioniert werden, dass auch die Positionierung der auf der Platine befindlichen Drehstellungssensoren in Bezug auf den Stator festgelegt ist.

Aus der DE 100 45 596 A1 ist bereits ein elektronisch kommutierter Gleichstrommotor der eingangs erwähnten Art bekannt, der als Antrieb für eine Kraftfahrzeug-Kühlwasserpumpe dient. Der Gleichstrommotor weist einen Rotor auf, der Permanentmagnete hat und in dem durch Kommutierung wechselnden Magnetfeld eines Stators rotiert. Das Magnetfeld ist durch ein Wicklungssystem erzeugbar, das in Umfangsrichtung voneinander beabstandete ünd auf ein Isolationskörper aufgebrachte Leitungswicklungen gebildet ist.

Der vorbekannte Gleichstrommotor weist eine als Steuerungselektronik dienende Kommutierungsschaltung auf, die den Phasen des Wicklungssystems zugeordnete berührungslose Drehstellungssensoren hat. Diese Drehstellungssensoren sind auf einem gemeinsamen Sensorträger angeordnet, der auch als eine, die Drehstellungssensoren tragende Sensorplatine ausgebildet sein kann. Die Steuerungselektronik ist mit den Zuleitungen der voneinander beabstandeten Leitungswicklungen über elektrische Kontakte verbunden, die an dem Sensorträger vorgesehen und als Schneidklemmen ausgebildet sind.

In der DE 100 45 596 A1 ist erwähnt, dass bei den Gleichstrommotoren vorbekannter Kühlwasserpumpen die Kommutierungsschaltung zusammen mit einer Statorwicklung im Wesentlichen in einem einzigen Raum angeordnet ist, weshalb eine Kühlung der Statorwicklung und der Kommutierungsschaltung nur begrenzt gewährleistet sein soll. Um nun die Kommutierungsschaltung sowie das Wicklungssystem optimal kühlen zu können und um den für die vorbekannten Kraftfahrzeug- Kühlwasserpumpen benötigten Bauraum und dessen Gewicht möglichst gering halten zu können, soll gemäß der DE 100 45 596 A1 die Kommutierungsschaltung des vorbekannten Gleichstrommotors im Lagerschild angeordnet sein. In der DE 100 45 596 A1 ist mit keinem Wort erwähnt, wie eine positionsgenaue Lage der Drehstellungssensoren in Bezug auf den Stator sichergestellt werden soll.

Aus der EP 1 324 465 A2 ist bereits ein bürstenloser Gleichstrommotor vorbekannt, bei dem die Steuerungselektronik in einem Behälter untergebracht ist, der mittels Schneid-Klemm-Verbindern relativ zum Stator positioniert und mit der Wicklung desselben verbunden wird.

Dabei sind die Steuerungselektronik und die zu ihr gehörigen Drehstellungssensoren auf einer ringförmigen Platine vorgesehen, die in einem elektrisch isolierenden Material eingekapselt sind, welches den Behälter ausfüllt. Auch bei diesem vorbekannten Gleichstrommotor sind die Steuerungselektronik, die Drehstellungssensoren und die zu ihrer Positionierung in Bezug auf den Stator erforderlichen Positionierhilfen mehrteilig ausgestaltet und erfordern einen nicht unerheblichen Konstruktions- und Herstellungsaufwand. Zudem ist in der EP 1 342 465 A2 nicht weiter beschrieben, wie der die Schneid-Klemm-Verbinder tragende Behälter einerseits und die im Behälterinneren befindliche Platine andererseits in ihrer Lage derart zueinander positioniert werden sollen, dass auch die Positionierung der auf der Platine befindlichen Drehstellungssensoren in Bezug auf den Stator festgelegt ist.

Aus DE 20 2006 012 075 U1 ist bereits ein Außenläufermotor vorbekannt, der einen Stator mit Statorwicklungen und eine senkrecht zur Motorachse an dem Stator angeordnete Schaltscheibe mit Leiterbahnen hat, die Wicklungsenden der Statorwicklung kontaktieren und mit einer Anschlussleitung verbindbar sind. Dabei sind die Wicklungsenden der Statorwicklungen mit wicklungsseitigen Kontaktabschnitten der auf der Schaltscheibe angeordneten Leiterbahnen über Schneid-Klemm-Kontakte elektrisch verbunden.

In keiner der entgegengehaltenen Druckschriften ist näher beschrieben, wie die lagegerechte Positionierung der auf einer Platine befindlichen Drehstellungssensoren in Bezug auf den Stator sichergestellt werden soll.

Es besteht daher die Aufgabe, einen bürstenlosen Gleichstrommotor der eingangs erwähnten Art zu schaffen, der mit vergleichsweise geringem Aufwand kostengünstig herstellbar ist.

Die erfindungsgemäße Lösung dieser Aufgabe besteht bei dem Gleichstrommotor der eingangs erwähnten Art in den Merkmalen des geltenden Patentanspruches 1.

Die Steuerungselektronik des erfindungsgemäßen Gleichstrommotors ist mit den Zuleitungen der voneinander beabstandeten Leitungswicklungen über elektrischen Kontakte verbunden, die als Positionierhilfen ausgebildet sind. Diese, als Positionierhilfe ausgebildeten elektrischen Kontakte sind an einem Sensorträger vorgesehen, der als eine, die Drehstellungssensoren tragende Sensorplatine ausgebildet ist. Da die Positionierhilfen als Schneidklemmen ausgestaltet sind und da diese Schneidklemmen die Zuleitungen der voneinander beabstandeten Leitungswicklungen im Bereich der in lagedefinierten Leitungsführungen des Stators befindlichen Leitungsabschnitte kontaktieren, ist eine lagegerechte Positionierung zwischen den auf der Sensorplatine vorgesehenen Drehstellungssensoren einerseits und dem Stator andererseits sichergestellt. Da die die Drehstellungssensoren tragende Sensorplatine mit dem Stator über Schneidklemmen verbunden ist, die gleichzeitig auch als Positionierhilfen dienen, zeichnet sich der erfindungsgemäße Gleichstrommotor durch seinen geringen Aufwand in Konstruktion und Herstellung aus. Da somit eine manuelle Ausrichtung der Drehstellungssensoren relativ zum Stator, das Verkleben dieser Drehstellungssensoren im Statorinneren und die Verlötung der Drehstellungssensoren mit den übrigen elektrischen Bauteilen des Gleichstrommotors vermieden werden, ist der erfindungsgemäße Gleichstrommotor mit geringem Aufwand herstellbar, wobei sich dieser Gleichstrommotor aufgrund der stets exakten Ausrichtung der Drehstellungssensoren in Bezug auf die am Stator vorgesehenen Leitungswicklungen durch ein entsprechend hohes Drehmoment auszeichnet. Der erfindungsgemäße Gleichstrommotor weist an der zumindest einen, dem Sensorträger zugeordneten Stirnseite seines Stators kronenförmig ausgestaltete Vorsprünge auf, von denen zumindest einzelne Vorsprünge als Leitungsführungen ausgebildet sind. Durch mäandrierendes Verlegen der den voneinander beabstandeten Leitungswicklungen zugeordneten Zuleitungen um die einzelnen Vorsprünge herum, lassen sich die elektrischen Leitungen am Umfang des Stators führen. Sind zumindest einzelne Vorsprünge auch als Leitungsführungen ausgebildet, kann der Sensorträger auf einfache Weise und gleichzeitig positionsgenau am Stator befestigt werden, wobei gleichzeitig auch die elektrische Verbindung zwischen der Steuerungselektronik einerseits und den übrigen elektrischen Bestandteilen des erfindungsgemäßen Gleichstrommotors andererseits hergestellt wird. Dieser automatisierte Herstellungsvorgang wird noch dadurch begünstigt, dass der Stator ein hülsenförmiges Statorgehäuse hat, an dessen Stirnseite jeweils eine Isolationskappe vorgesehen ist, von denen zumindest eine Isolationskappe zur Verbindung mit einem Sensorträger ausgebildet ist, wobei die am Stator beidseits vorgesehenen Isolationskappen zwischen sich die voneinander beabstandeten Leitungswicklungen des dem Stator zugeordneten mehrphasigen Wicklungssystems tragen.

Eine bevorzugte Weiterbildung gemäß der Erfindung sieht vor, dass jede Leitungsführung einander kreuzende Führungsöffnungen hat, von denen eine Führungsöffnung zur Aufnahme eines von der Schneidklemme kontaktierten Leitungsabschnitts bestimmt ist und von denen eine andere, stirnseitig offene Führungsöffnung zum Einführen jeweils einer Schneidklemme ausgestaltet ist.

Die den voneinander beabstandeten Leitungswicklungen zugeordneten Zuleitungen lassen sich besonders einfach im Bereich des Statorgehäuses führen und der Sensorträger kann mit geringem Aufwand an der Stator-Stirnseite befestigt werden, wenn die zur Aufnahme des Leitungsabschnitts und/oder zum Einführen der Schneidklemme vorgesehenen Führungsöffnungen jeder Leitungsführung schlitzförmig ausgestaltet sind.

Eine bevorzugte Ausführungsform gemäß der Erfindung sieht vor, dass der Stator an seiner zumindest einen, dem Sensorträger zugeordneten Stirnseite kronenförmig ausgestaltete Vorsprünge hat, von denen zumindest einzelne Vorsprünge als Leitungsführungen ausgebildet sind. Durch mäandrierendes Verlegen der den voneinander beabstandeten Leitungswicklungen zugeordneten Zuleitungen um die einzelnen Vorsprünge herum lassen sich die elektrischen Leitungen am Umfang des Stators führen. Sind zumindest einzelne Vorsprünge auch als Leitungsführungen ausgebildet, kann der Sensorträger auf einfache Weise und gleichzeitig positionsgenau am Stator befestigt werden, wobei gleichzeitig auch die elektrische Verbindung zwischen der Steuerungselektronik einerseits und den übrigen elektrischen Bestandteilen des erfindungsgemäßen Gleichstrommotors andererseits hergestellt wird.

Weitere Merkmale der Erfindung ergeben sich aus den Ansprüchen in Verbindung mit den Zeichnungen sowie der Beschreibung. Nachstehend wird die Erfindung anhand eines bevorzugten Ausführungsbeispieles noch näher beschrieben:

Es zeigt in schematischer Darstellung:
- Fig. 1: die in einer auseinandergezogenen Perspektivdar- stellung gezeigten Bestandteile des Stators eines bürstenlosen Gleichstrommotors,
- Fig. 2: das als Statorpaket dienende Statorgehäuse des in Fig. 1 gezeigten Gleichstrommotors, wobei das Sta- torgehäuse an seinem Gehäuse-Innenumfang durch ra- dial nach Innen vorstehende Wickelvorsprünge von- einander getrennte Nuten hat, die jeweils durch eine in die Nuten eingesetzte Nutenisolation von- einander getrennt sind.
- Fig. 3: das die Nutenisolationen tragende Statorgehäuse des in Fig. 1 und 2 gezeigten Stators wobei an den bei- den Stirnseiten des Statorgehäuses Isolationskappen vorgesehen sind, und wobei eine der Isolationskap- pen mit einem Sensorträger verbindbar ist,
- Fig. 4: das bereits zu einem Statorpaket zusammengebaute Statorgehäuse des in Fig. 1 bis 3 gezeigten Sta- tors, wobei an einer der Stirnseiten des Stators ein Sensorträger befestigbar ist, an dem in Rich- tung zum Stator Drehstellungssensoren vorstehen,
- Fig. 5: den Sensorträger aus Fig. 4 im teilweise längsge- schnittenen Bereich einer als Positionierhilfe die- nenden Schneidklemme,
- Fig. 6: die Sensorträger aus Fig. 4 und 5 im teilweise quergeschnittenen Bereich einer Schneidklemme,
- Fig. 7: den Stator aus Fig. 1 bis 4 unmittelbar vor dem positionsgenauen Aufklipsen des Sensorträgers,
- Fig. 8: den Stator eines bürstenlosen Gleichstrommotors in montiertem Zustand,
- Fig. 9: das Wicklungssystem des in den Fig. 1 bis 4 und 7 bis 8 gezeigten Stators in einer schematischen Dar- stellung, und
- Fig. 10: das Wicklungssystem der im Stator vorgesehenen, voneinander beabstandeten Leitungswicklungen, eben- falls in einer schematischen Darstellung.

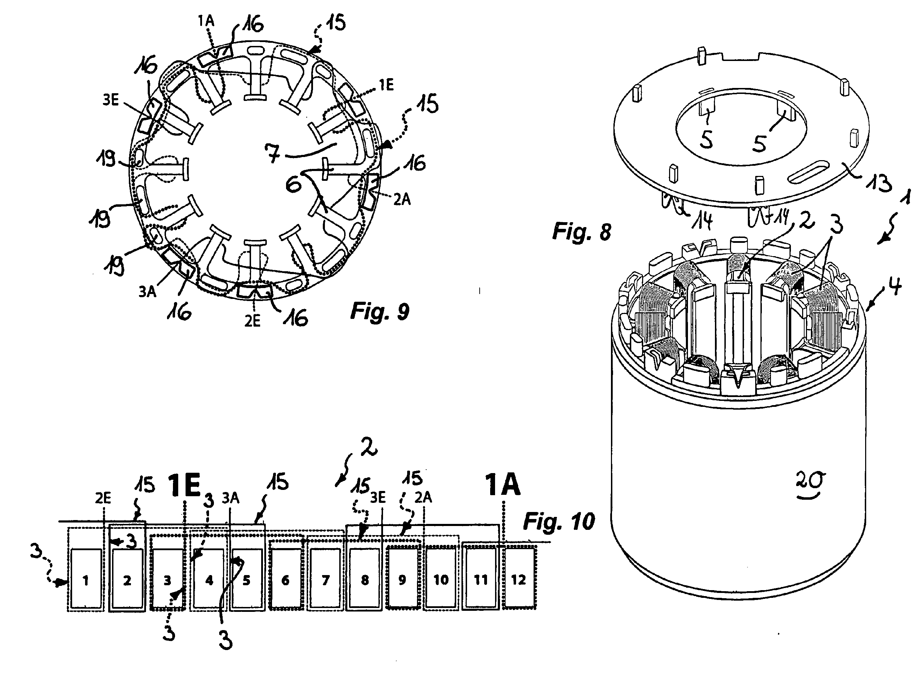

In Fig. 8 ist der Stator 1 eines bürstenlosen Gleichstrommotors in einer Perspektivdarstellung gezeigt, welcher Gleichstrommotor beispielsweise als Pumpenantrieb insbesondere für eine Membranpumpe verwendet werden kann. Dem Gleichstrommotor ist ein hier nicht weiter dargestellter Rotor zugeordnet, der an seinem Außenumfang Permanentmagnete trägt. Der Rotor wird durch das durch Kommutierung, d.h. durch Änderung der Stromrichtung wechselnde Magnetfeld des ringförmigen Stators 1 angetrieben, wobei der Rotor in dem ihn ringförmig umgreifenden Stator 1 rotiert. Das Magnetfeld ist durch ein mehrphasiges Wicklungssystem 2 mit in Umfangsrichtung voneinander beabstandeter Leitungswicklungen 3 erzeugbar, die auf einem im Ganzen mit 4 gekennzeichneten Isolationskörper aufgewickelt sind.

Zur Ansteuerung der voneinander beabstandeten Leitungswicklungen des im Stator vorgesehenen Leitungssystems ist eine Steuerungselektronik vorgesehen, die den Phasen des Wicklungssystems 2 zugeordnete berührungslose Drehstellungssensoren 5 umfasst. Diese Drehstellungssensoren 5 können beispielsweise als Hall-Sensoren ausgebildet sein.

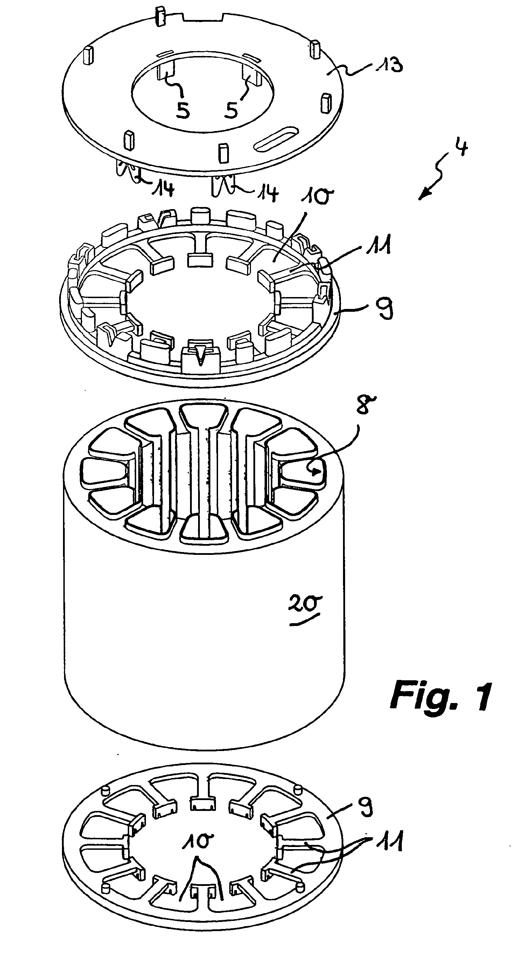

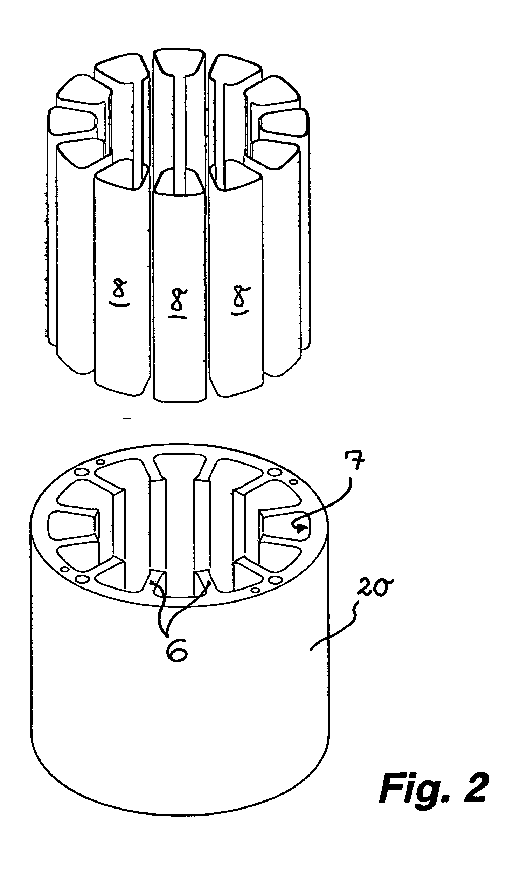

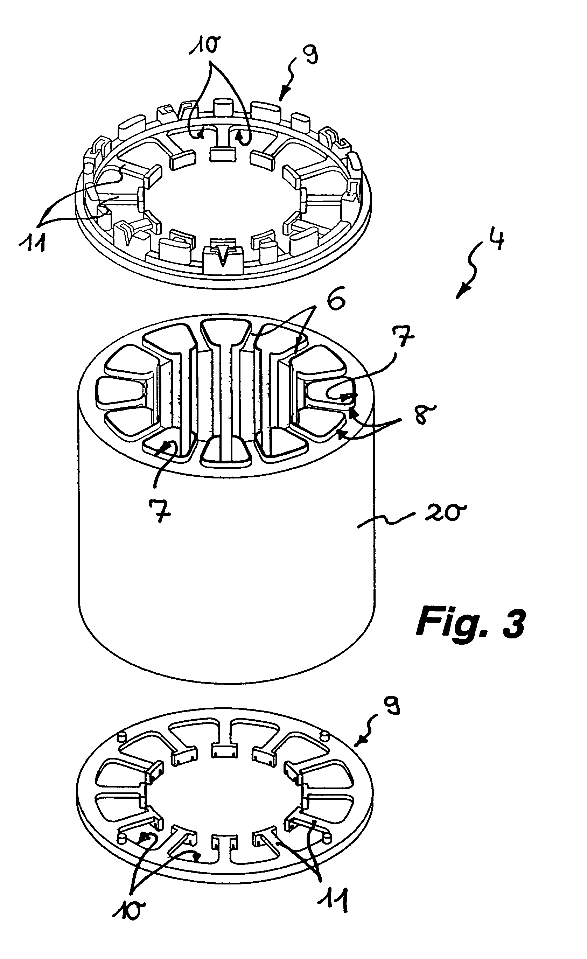

In den Fig. 1 bis 7 sind die einzelnen Herstellungsschritte zur Herstellung des in Fig. 8 gezeigten Stators 1 dargestellt. Der im Ganzen mit 4 gekennzeichnete Isolationskörper des Stators 1 weist ein massives, hülsenförmiges Statorgehäuse 20 auf, das an seinem Gehäuse-Innenumfang Wickelvorsprünge 6 trägt, die zwischen sich in Längsrichtung orientierte Nuten 7 begrenzen. Der die Nuten 7 begrenzende Wandungsinnenumfang ist jeweils durch eine, in den Nuten 7 angeordnete Nutenisolation 8 ausgekleidet. An den Stirnseiten des Statorgehäuses 20 sind ringförmige Isolationskappen 9 aufgesetzt, die im Bereich der Nuten 7 und Nutenisolation 8 innenumfangsseitig taschenförmige Aussparungen 10 haben. Diese Aussparungen 10 der Isolationskappen 9 sind ebenfalls durch innenumfangsseitig voneinander beabstandete Wickelvorsprünge 11 getrennt. Die Drehstellungssensoren 5 sind auf einem Sensorträger 13 angeordnet und stehen in Richtung zum Stator 1 vor.

Die Drehstellungssensoren 5 sind auf einem Sensorträger 13 angeordnet und stehen in Richtung zum Stator 1 vor. Dieser Sensorträger 13 ist als eine, vorzugsweise alle Drehstellungssensoren 5 tragende Sensorplatine ausgebildet. Zwischen dem zumindest einen Sensorträger 13 und der benachbarten Stator-Stirnseite sind miteinander zusammenwirkende Positionierhilfen vorgesehen, welche die Relativposition des Stators 1 in Bezug auf den Sensorträger 13 und den auf ihm angeordneten Drehstellungssensoren 5 festlegen.

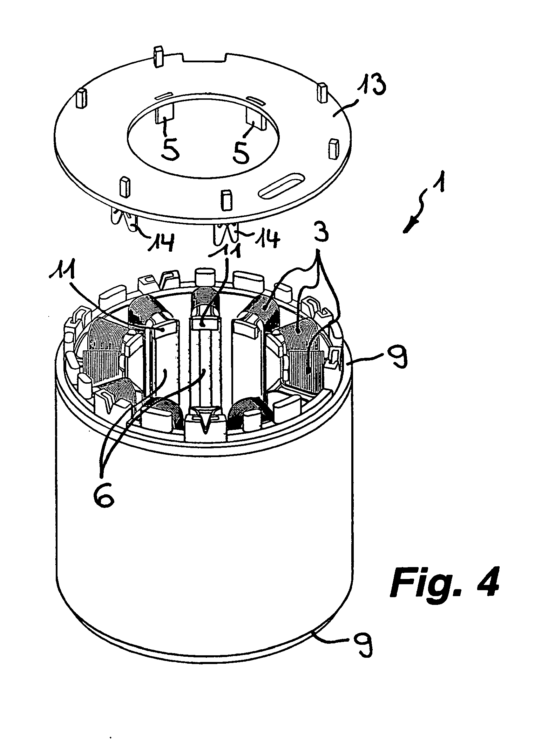

In der auseinandergezogenen Darstellung des für einen bürstenlosen Gleichstrommotor bestimmten Stators 1 in Fig. 4 ist gut erkennbar, dass die voneinander beabstandeten Leitungswicklungen 3 innerhalb der Nutenisolationen 8 um die an den Isolationskappen 9 einerseits und den am Innenumfang des Statorgehäuses 2 andererseits vorstehenden Wickelvorsprüngen 6, 11 gewickelt sind.

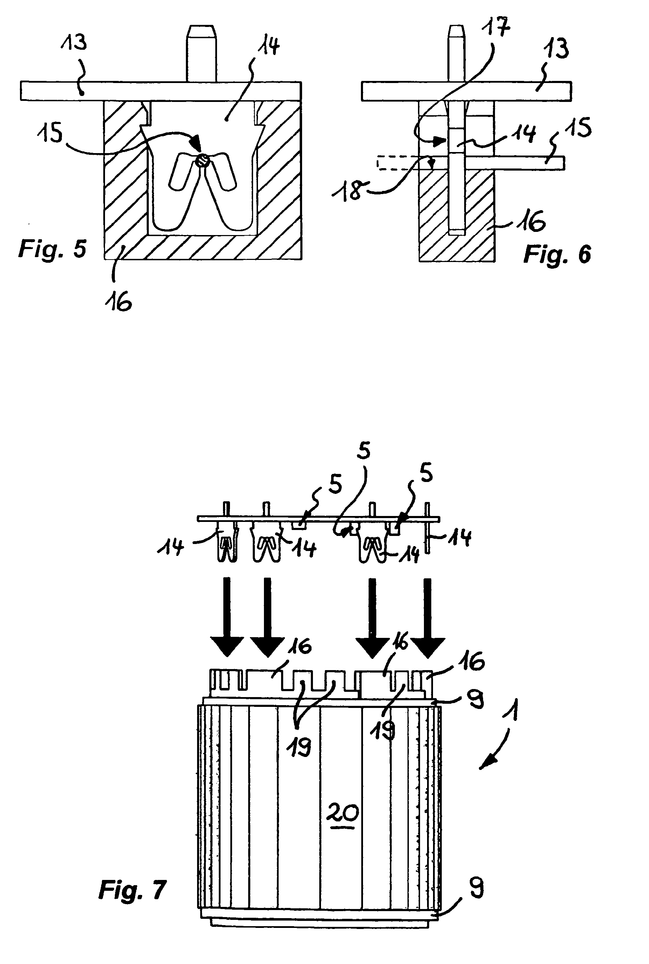

In den Fig. 4 bis 7 ist veranschaulicht, dass der auf dem Sensorträger 13 befindliche und die Drehstellungssensoren 5 umfassende Teil der Steuerungselektronik mit den Zuleitungen 15 der voneinander beabstandeten Leitungswicklungen 3 über elektrische Kontakte verbunden ist, die als Positionierhilfe ausgebildet sind. Dabei sind die als Positionierhilfen ausgebildeten elektrischen Kontakte am Sensorträger 13 vorgesehen. In den Fig. 5 und 6 ist erkennbar, dass die an dem Sensorträger 13 vorgesehenen und als Positionierhilfen dienenden Kontakte hier als Schneidklemmen 14 ausgebildet sind.

In Fig. 5 und 6 ist dargestellt, dass die Zuleitungen 15 der voneinander beabstandeten Leitungswicklungen 3 mit ihren von den Schneidklemmen 14 kontaktierten Leitungsabschnitten in lagedefinierten Leitungsführungen 16 des Stators 1 gehalten sind. Dabei weist jede Leitungsführung 16 einander kreuzende und schlitzförmig ausgebildete Führungsöffnungen 17, 18 auf, von denen eine Führungsöffnung 17 zur Aufnahme eines von der Schneidklemme 14 kontaktierten Leitungsabschnitts bestimmt ist und von denen eine andere, stirnseitig offene Führungsöffnung 18 zum Einführen einer Schneidklemme 14 ausgestaltet ist. In Fig. 7 ist gezeigt, dass durch bloßes Aufstecken der am Sensorträger 13 vorstehenden Schneidklemmen 14 auf die Leitungsführungen 16 des Stators 1 und durch Einführen dieser Schneidklemmen 14 in die an den Leitungsführungen 16 vorgesehenen Führungsschlitze 17 auf einfache Weise mit dem Stator 1 verbunden und elektrisch kontaktiert werden kann.

Dabei wird aus den Figuren 4 und 7 deutlich, dass der Stator ein an seiner zumindest einen, dem Sensorträger 13 zugeordneten Stirnseite kronenförmig ausgestaltete Vorsprünge 16, 19 hat, von denen zumindest einzelne Vorsprünge als Leitungsführungen 16 ausgebildet sind.

Durch das in Fig. 9 veranschaulichte mäandrierende Umwickeln dieser kronenförmigen Vorsprünge 16, 19 lassen sich die den voneinander beabstandeten Leitungswicklungen 3 zugeordneten Zuleitungen 15 sicher und bequem am Gehäuseumfang des Stators 1 verlegen.

Der hier dargestellte Stator 1 weist ein hülsenförmiges Statorgehäuse 20 auf, an dessen Stirnseiten die Isolationskappen 9 vorgesehen sind. Davon ist die dem Sensorträger 13 zugeordnete Isolationskappe 9 zur Verbindung mit dem Sensorträger 13 ausgebildet, wobei die am Stator 1 beidseits vorgesehenen Isolationskappen 9 zwischen sich die voneinander beabstandeten Leitungswicklungen 3 des dem Stator 1 zugeordneten mehrphasigen Wicklungssystems 2 tragen.

Durch die Verwendung der beidseits an den Stator-Stirnseiten vorgesehenen Isolationskappen 9 wird ein vollautomatischer Wickelprozess bei der Herstellung des Stators 1 gewährleistet. Mit Hilfe der am Sensorträger 13 vorgesehenen und als Positionierhilfen dienenden Schneidklemmen 14 kann auf eine Abisolierung der den Leitungswicklungen 3 zugeordneten Drahtenden verzichtet werden. Auch ein Verlöten der Steuerungselektronik im Bereich der Drehstellungssensoren 5 ist nicht mehr erforderlich, weil der elektrische Kontakt lötfrei durch Aufstecken der Schneidklemmen 14 hergestellt werden kann. Da die Drehstellungssensoren lagegerecht auf dem Sensorträger 13 vorstehen, ist kein zusätzliches Befestigungsmaterial notwendig, um die Drehstellungssensoren 5 positionsgenau im Bereich des Stators 1 befestigen zu können.

Der hier dargestellte und für einen bürstenlosen Gleichstrommotor bestimmte Stator 1 lässt sich daher in einem automatisierten Herstellungsverfahren kostengünstig auf einfache Weise herstellen.

## Patentansprüche

1. Bürstenloser Gleichstrommotor,
a) der einen, Permanentmagnete aufweisenden Rotor hat, der in dem durch Kommutierung wechselnden Magnetfeld eines Stators (1) rotiert,
b) welches Magnetfeld durch ein Wicklungssystem in Umfangsrichtung voneinander beabstandeter und auf einen Isolationskörper (4) aufgebrachter Leitungswicklungen (3) erzeugbar ist, wobei
c) zur Ansteuerung der voneinander beabstandeten elektrischen Leitungswicklungen (3) des im Stator (1) vorgesehenen Wicklungssystems eine Steuerungselektronik mit,
d) den Phasen des Wicklungssystems (2) zugeordneten berührungslosen Drehstellungssensoren (5) zugeordnet ist,
e) die auf einem gemeinsamen Sensorträger (13) angeordnet sind, welcher Sensorträger (13) an einer Stirnseite des Stators (1) befestigbar ist, und
f) zwischen dem Sensorträger (13) und der benachbarten Stator-Stirnseite miteinander zusammenwirkende Positionierhilfen vorgesehen sind, welche die Relativposition des Stators (1) in Bezug auf den Sensorträger (13) und den auf ihm angeordneten Drehstellungssensoren (5) festlegen, wobei
g) die Steuerungselektronik mit den Zuleitungen (15) der voneinander beabstandeten Leitungswicklungen (3) über elektrische Kontakte verbunden ist, die als Positionierhilfen ausgebildet sind,
h) die als Positionierhilfen ausgebildeten elektrischen Kontakte an dem Sensorträger (13) vorgesehen und als Schneidklemmen (14) ausgebildet sind,
i) der Sensorträger (13) als eine, die Drehstellungssensoren (12) tragende Sensorplatine ausgebildet ist, und
j) die Zuleitungen (15) der voneinander beabstandeten Leitungswicklungen (3) mit ihren von den Schneidklemmen (14) kontaktierten Leitungsabschnitten in lagedefinierten Leitungsführungen (16) des Stators (1) gehalten sind, wobei
k) der Stator (1) ein hülsenförmiges Statorgehäuse (20) hat, an dessen Stirnseiten jeweils eine Isolationskappe (9) vorgesehen ist, von denen zumindest eine Isolationskappe (9) zur Verbindung mit einem Sensorträger (13) ausgebildet ist,
l) die am Stator (1) beidseits vorgesehenen Isolationskappen (9) zwischen sich die voneinander beabstandeten Leitungs-Wicklungen (3) des dem Stator (1) zugeordneten mehrphasigen Wicklungssystems (2) tragen, und wobei
m) bei zumindest einer Isolätionskappe (9) die dem Sensorträger (13) zugeordnete Stirnseite kronenförmig ausgestaltete Vorsprünge (16, 19) aufweist, zum mäandrierenden Verlegen der den voneinander beabstandeten Leitungswicklungen zugeordneten Zuleitungen um die einzelnen Vorsprünge (16, 19) herum, wobei zumindest einzelne Vorsprünge (16, 19) als Leitungsführungen (16) ausgebildet sind.

2. Gleichstrommotor nach Anspruch 1, **dadurch gekennzeichnet, dass** jede Leitungsführung (16) einander kreuzende Führungsöffnungen (17, 18) hat, von denen eine Führungsöffnung (17) zur Aufnahme eines von der Schneidklemme (14) kontaktierten Leitungsabschnitts bestimmt ist und von denen eine andere, stirnseitig offene Führungsöffnung (18) zum Einführen einer Schneidklemme (14) ausgestaltet ist.

3. Gleichstrommotor nach Anspruch 2, **dadurch gekennzeichnet, dass** die zur Aufnahme des Leitungsabschnitts und/oder zum Einführen der Schneidklemme (14) vorgesehenen Führungsöffnungen (17, 18) schlitzförmig ausgestaltet sind.

## Claims

1. Brushless DC motor,
a) which has a rotor having permanent magnets, which rotor rotates in the magnetic field of a stator (1), which magnetic field is alternating as a result of commutation,
b) which magnetic field can be generated by a winding system of line windings (3) which are spaced apart from one another in the circumferential direction and are applied to an insulating body (4), wherein
c) in order to actuate the electrical line windings (3), which are spaced apart from one another, of the winding system provided in the stator (1), control electronics
d) are assigned to contactless rotor position sensors (5), which are assigned to the phases of the winding system (2),
e) and which are arranged on a common sensor mount (13), which sensor mount (13) can be fastened to an end side of the stator (1), and
f) positioning aids are provided which interact with one another between the sensor mount (13) and the adjacent stator end side and which fix the relative position of the stator (1) in relation to the sensor mount (13) and the rotary position sensors (5) arranged thereon, wherein
g) the control electronics are connected to the feed lines (15) of the line windings (3), which are spaced apart from one another, via electrical contacts, which are formed as positioning aids,
h) the electrical contacts formed as positioning aids are provided on the sensor mount (13) and are in the form of insulation displacement contacts (14),
i) the sensor mount (13) is formed as sensor circuit board on which the rotary position sensors (12) are mounted, and
j) the feed lines (15) of the line windings (3), which are spaced apart from one another, are held with their line sections, with which contact has been made by the insulation displacement contacts (14), in positionally defined line guides (16) of the stator, wherein
k) the stator (1) has a sleeve-shaped stator housing (20), with in each case one insulating cap (9) being provided on the end sides of said stator housing, of which insulating caps at least one (9) is designed for connection to a sensor mount (13),
l) the insulating caps (9) provided on both sides of the stator (1) have mounted between them the line windings (3), which are spaced apart from one another, of the polyphase winding system (2) assigned to the stator (1), and wherein
m) in the case of at least one insulting cap (9), the end side which is assigned to the sensor mount (13) has crown-shaped projections (16, 19), for the meandering laying of the feed lines, assigned to the line windings which are spaced apart from one another, around the individual projections (16, 19), wherein at least individual projections (16, 19) are in the form of line guides (16).

2. DC motor according to Claim 1, **characterized in that** each line guide (16) has guide openings (17, 18) which cross over one another and of which one guide opening (17) is intended for receiving a line section with which contact has been made by the insulation displacement contact (14), and of which another guide opening (18), which is open at one end, is configured for inserting an insulation displacement contact (14).

3. DC motor according to Claim 2, **characterized in that** the guide openings (17, 18) intended for receiving the line section and/or for inserting the insulation displacement contact (14) are slot-shaped.

## Revendications

1. Moteur à courant continu sans balais,
a) qui possède un rotor présentant des aimants permanents, lequel tourne dans le champ magnétique alternant par commutation d'un stator (1),
b) lequel champ magnétique peut être produit par un système d'enroulements formé d'enroulements de conducteurs (3) espacés les uns des autres en direction circonférentielle et disposés sur un corps isolant (4), sachant que
c) pour commander les enroulements de conducteurs électriques (3) espacés les uns des autres du système d'enroulements prévu dans le stator (1), il est prévu une électronique de commande avec
d) des capteurs de position de rotation sans contact (5) associés aux phases du système d'enroulements (2),
e) qui sont disposés sur un support de capteurs commun (13), lequel support de capteurs (13) peut être fixé à une face d'extrémité du stator (1), et
f) entre le support de capteurs (13) et la face d'extrémité de stator sont prévus des moyens de positionnement qui coopèrent entre eux et qui définissent la position relative du stator (1) par rapport au support de capteurs (13) et aux capteurs de position de rotation (5) disposés sur celui-ci,
g) l'électronique de commande étant reliée aux lignes d'alimentation (15) des enroulements de conducteurs (3) espacés les uns des autres par des contacts électriques qui sont configurés comme des moyens de positionnement,
h) les contacts électriques configurés comme des moyens de positionnement étant prévus sur le support de capteurs (13) et configurés comme des bornes autodénudantes (14),
i) le support de capteurs (13) étant configuré comme une platine de capteurs portant les capteurs de position de rotation (12), et
j) les lignes d'alimentation (15) des enroulements de conducteurs (3) espacés les uns des autres avec leurs portions de ligne contactées par les bornes autodénudantes (14) étant maintenues dans des guides de ligne (16) à des positions définies du stator (1), sachant que
k) le stator (1) possède un boîtier de stator (20) en forme de douille, à chaque face d'extrémité duquel est prévu un chapeau isolant (9), au moins un chapeau isolant (9) étant configuré pour être relié à un support de capteurs (13),
l) les chapeaux isolants (9) prévus des deux côtés sur le stator (1) portent entre eux les enroulements de conducteurs (3) espacés les uns des autres du système d'enroulements polyphasé (2) associé au stator (1), et
m) sur au moins un chapeau isolant (9), la face d'extrémité associée au support de capteurs (13) présente des saillies (16, 19) en forme de couronne pour la pose en méandres des lignes d'alimentation associées aux enroulements de conducteurs espacés les uns des autres autour des différentes saillies (16, 19), au moins certaines saillies (16, 19) étant configurées comme des guides de ligne (16).

2. Moteur à courant continu selon la revendication 1, **caractérisé en ce que** chaque guide de ligne (16) présente des ouvertures de guidage (17, 18) se croisant l'une l'autre, dont une ouverture de guidage (17) est destinée à recevoir une portion de ligne contactée par la borne autodénudante (14) et dont une autre ouverture de guidage (18), ouverte du côté frontal, est configurée pour l'introduction d'une borne autodénudante (14).

3. Moteur à courant continu selon la revendication 2, **caractérisé en ce que** les ouvertures de guidage (17, 18) prévues pour recevoir la portion de ligne et/ou pour l'introduction de la borne autodénudante (14) sont configurées en forme de fente.
